# EUROPÄISCHE PATENTANMELDUNG

(11) **EP 2 722 283 A1**
(43) Veröffentlichungstag der Anmeldung: **23.04.2014**
(21) Anmeldenummer: 13004628.7
(22) Anmeldetag: 24.09.2013
(51) Int. Cl.: B65B 59/00, B65G 35/08, B65G 1/04, B65G 1/14, B65B 43/42

(54) **Vorrichtung zum Befüllen von Behältern mit Nahrungsmitteln**

(30) Priorität: 16.10.2012 DE 102012020307
(71) Anmelder: Hamba Filltec GmbH & Co. KG, 66130 Saarbrücken (DE)
(72) Erfinder: Junk, Martin, 66636 Tholey (DE)
(74) Vertreter: Ostriga Sonnet Wirths & Vorwerk

(57) **Zusammenfassung**

Dargestellt und beschrieben ist eine Vorrichtung zum Befüllen von Behältern mit dünnflüssigen bis pastösen Nahrungsmitteln, wobei
- Tragelemente in Förderrichtung entlang eines Obertrums, eines ersten Seitentrums, eines Untertrums und eines zweiten Seitentrums endlos durch die Vorrichtung geführt sind,
- die Tragelemente kettenlos durch die Vorrichtung geführt sind,
- die Tragelemente von einer Fördereinrichtung zwischen dem Obertrum und dem Untertrum verfahren werden.
- die Tragelemente Aufnahmen für die Behälter aufweisen,
- die Behälter in den Tragelementen entlang von Arbeitsstationen geführt sind.

Es ist Aufgabe der Erfindung eine gattungsgemäße Vorrichtung bereit zu stellen, bei welcher der Formatwechsel schnell und möglichst einfach erfolgen kann.

Die Aufgabe wird dadurch gelöst, das eine Vorrichtung mit den Merkmalen des Anspruches 1, insbesondere mit den kennzeichnenden Merkmalen, wonach ein Magazin an zumindest einem der Seitentrümer anordenbar ist und das Magazin dem Einbringen von weiteren Tragelementen aus dem Magazin in die Vorrichtung und/oder der Aufnahme von in der Vorrichtung befindlichen Tragelementen dient.

## Beschreibung

Die Erfindung betrifft eine Vorrichtung zum Befüllen von Behältern mit dünnflüssigen bis pastösen Nahrungsmitteln, wobei
- Tragelemente in Förderrichtung entlang eines Obertrums, eines ersten Seitentrums, eines Untertrums und eines zweiten Seitentrums endlos durch die Vorrichtung geführt sind,
- die Tragelemente kettenlos durch die Vorrichtung geführt sind,
- die Tragelemente von einer Fördereinrichtung zwischen dem Obertrum und dem Untertrum verfahren werden,
- die Tragelemente Aufnahmen für die Behälter aufweisen,
- die Behälter in den Tragelementen entlang von Arbeitsstationen geführt sind.

Solche Vorrichtungen zum Befüllen von Behältern mit Nahrungsmitteln sind aus dem Stand der Technik durch verschiedene Patentschriften offenbart. Hier sei beispielsweise auf die EP 1 495 997 B1, die WO 2011/072628 A1 sowie auf die bislang unveröffentlichten Anmeldungen der Anmelderin DE 10 2011 10 31 522, DE 10 2011 10 32 561 und DE 10 2011 10 31 549 verwiesen.

Dieser vorgenannte Stand der Technik offenbart samt und sonders Vorrichtungen mit sogenanntem kettenlosen Antrieb, die den bislang weitaus verbreiteteren Vorrichtungen zum Befüllen von Behältern mit Nahrungsmitteln mit sogenanntem Kettenantrieb gegenüber zu stellen sind. Bei Vorrichtungen mit Kettenantrieb sind die einzelnen Tragelemente über eine Antriebskette miteinander verbunden. Das heißt, die Tragelemente sind über geeignete Befestigungen mit einer Antriebs- oder Vortriebskette bewegungsgekoppelt. Diese Kette wird wiederum durch einen motorischen Antrieb in Bewegung gesetzt, sodass die Tragelemente endlosumlaufend durch die Vorrichtung bewegt werden. Ein kettenloser Antrieb ist in der Fachwelt somit definiert als ein Antrieb, der ohne eine oder mehrere die Tragelemente untereinander verbindende Antriebs- oder Vortriebsketten auskommt.

Kettenlose Vorrichtungen bzw. Vorrichtungen mit kettenlosem Antrieb (beides soll hier synonym verwendet werden) haben den wesentlichen Vorteil, dass die Tragelemente nach einmalig erfolgter Positionskalibrierung an den einzelnen Arbeitsstationen, wie Sterilisationseinrichtung, Siegeleinrichtung, Befülleinrichtung etc., dauerhaft lageexakt durch die Vorrichtung geführt sind. Die bei einem kettenbehafteten Vortrieb auftretende Kettenlängung und die sich damit verändernde Positionierung der Tragelemente relativ zu den Arbeitsstationen wird sicher vermieden. Zudem können bei Vorrichtungen mit kettenlosem Antrieb eine ganze Reihe von Bauteilen weniger massiv ausgeführt werden, da die Ketten mit ihren Masseträgheitsmomenten, die entsprechenden Zahnräder und Führungsleisten und eine ganze Reihe weiterer, der notwendigen Statik geschuldeter Bauteile nicht länger benötigt werden.

Bei Vorrichtungen zum Befüllen von Behältern mit Nahrungsmitteln, gleich ob mit Kettenantrieb oder mit kettenlosem Antrieb, ist es üblich, Tragelemente mit Aufnahmen für eine erste Behälterart gegen Tragelemente mit abweichenden Aufnahmen für eine zweite Behälterart auszutauschen, um verschiedene Produkte oder Verpackungsgrößen mit ein und derselben Maschine abarbeiten zu können. Dieser Vorgang wird allgemein als Formatwechsel bezeichnet und ist bei kettenbetriebenen Vorrichtungen nur relativ aufwändig zu bewerkstelligen. Da die Tragelemente jedes für sich mit der Kette bewegungsgekoppelt sind, müssen hier die Befestigungen gelöst werden, die Tragelemente sind auszutauschen und anschließend wieder zu befestigen. Im Anschluss daran muss in jedem Fall eine Neuzentrierung der Tragelemente hinsichtlich der Arbeitsstation durchgeführt werden.

Der Formatwechsel kann bei kettenlosen Vorrichtungen theoretisch einfach erfolgen, da das aufwändige Lösen und das erneute Befestigen der Tragelemente auf eine Antriebskette entfällt. Da kettenlose Vorrichtungen zum Befüllen von Behältern mit Nahrungsmitteln nach Kenntnis der Anmelderin bislang nur theoretisch diskutiert oder allenfalls Prototypenstatus erreicht haben, ist es Aufgabe der Erfindung, eine gattungsgemäße Vorrichtung bereit zu stellen, bei welcher der Formatwechsel schnell und möglichst einfach erfolgen kann.

Gelöst wird die Aufgabe von einer Vorrichtung mit den Merkmalen des Anspruches 1, insbesondere mit den kennzeichnenden Merkmalen, wonach ein Magazin an zumindest einem der Seitentrümer anordenbar ist und das Magazin dem Einbringen von weiteren Tragelementen aus dem Magazin in die Vorrichtung und/oder der Aufnahme von in der Vorrichtung befindlichen Tragelementen dient.

Die Erfindung geht dabei davon aus, dass die als Seitentrümer bezeichneten Umlenkbereiche, in denen die Tragelemente vom Obertrum ins Untertrum wechseln, beispielsweise wie in der WO 2011/072628 A1 durch eine Hebe- bzw. Senkvorrichtung gebildet sind und das Magazin unmittelbar an diese Hebe- bzw. Senkvorrichtung andockbar ist. In der vorgenannten PCT-Anmeldung sind Ober- und Untertrum somit ohne weiteres zugänglich, sodass sowohl das Einsetzen wie das Entnehmen weiterer Tragelemente durch einfaches Einschieben auf die dortigen Laufleisten möglich ist.

Geht man von anders ausgestalteten Seitentrümern aus, wie beispielsweise in der EP 1495997 B1 in den Figuren 12, 11, 10, oder 9 dargestellt, wird man erkennen, dass Ober- und Untertrum seitlich nicht ohne weiteres zugänglich sind, sondern die Hebevorrichtungen zum Umsetzen der Tragelemente vom Obertrum ins Untertrum die Seitentrümer schließen. Da bei einem kettenlosen Antrieb die Tragelemente untereinander keinen geschlossenen Verbund bilden, kann bei geschlossenen Seitentrümern gemäß EP 1495997 B1 die Umsetzvorrichtung einfach entfernt werden, indem beispielsweise Schnellwechselverschlüsse vorgesehen sind, sodass das erfindungsgemäße Magazin auch bei solcher Art ausgebildeten Seitentrümern nutzbar ist.

Der wesentliche Vorteil des erfindungsgemäßen Magazins ist zunächst darin zu sehen, dass es am Seitentrum anordnenbar und befestigbar ist, sodass die im Magazin vorgehaltenen Tragelemente einfach in das Ober- oder Untertrum einschiebbar sind. Da das Einbringen eines Tragelementes in eines der Trümer fast in jedem Falle zwingend auch die Entnahme eines anderen Tragelementes voraussetzt, ist der zweite wesentliche Vorteil darin zu sehen, dass nicht nur die für den Formatwechsel erforderlichen neuen Tragelemente im Magazin vorgehalten werden können, sondern gleichzeitig auch die durch den Formatwechsel aus einem der Trümer zu entfernenden Tragelemente in das Magazin einbringbar sind.

Es ist von wesentlichem Vorteil, wenn das Magazin Positionierglieder aufweist, die mit vorrichtungsseitigen Positioniergliedern kooperieren, um eine ausrichtungskorrekte Anordnung des Magazins an der Vorrichtung zu gewährleisten, da so ein reibungsloses Einsetzen der Tragelemente in die Trümer sowie gleichzeitig eine reibungslose Entnahme der Tragelemente aus den Trümern gewährleistet werden kann.

Des Weiteren ist vorgesehen, dass das Magazin und die Vorrichtung jeweils miteinander kooperierende Koppelglieder aufweisen, die eine ortsfeste Anordnung des Magazins an der Vorrichtung gewährleisten. Durch die ortsfeste Anordnung des Magazins an der Vorrichtung ist gewährleistet, dass sich dieses nicht lösen kann und der Formatwechsel reibungslos durchführbar ist.

Um eine geordnete Aufbewahrung der Tragelemente zu gewährleisten, ist vorgesehen, dass das Magazin Einschubelemente zur Aufnahme und/oder Entnahme einzelner Tragelemente aufweist.

Es ist weiterhin vorgesehen, dass die Einschubelemente vertikal verfahrbar im Magazin angeordnet sind. Hierdurch ist gewährleistet, dass nach Entnahme eines Tragelementes aus dem Magazin und Aufnahme eines anderen Tragelementes durch das Magazin mittels einer entsprechenden Vertikalbewegung die durch Entnahme frei gewordenen Einschubelemente zu demjenigen Trum bewegt werden, wo die Aufnahme eines aus der Vorrichtung herauszunehmenden Tragelementes zu erfolgen hat. Gleichzeitig wird ein mit einem einzusetzenden Tragelement versehenes Einschubelement an demjenigen Trum angeordnet, in welches die neuen Tragelemente eingeführt werden.

Besonders bevorzugt ist eine Vorrichtung, die sich dadurch kennzeichnet, dass die Einschubelemente nach Art eines Paternosters an einer vertikal ausgerichteten Magazinstütze geführt sind. Hierdurch ist ein Umlauf der Einschubelemente gewährleistet, sodass ein kontinuierliches Einsetzen und Entnehmen von Tragelementen gewährleistet ist.

Es ist weiterhin vorgesehen, dass die Einschubelemente und/oder die Tragelemente dreh- oder schwenkbar im Magazin gelagert sind.

Dabei ist insbesondere vorgesehen, dass die Einschubelemente und/oder die in den Einschubelementen einsitzenden Tragelemente im oberen und unteren Wendeumlauf um jeweils etwa 180 Grad gedreht oder geschwenkt sind.

Um die Schwenk- bzw. Drehbewegung einfach und zuverlässig zu induzieren, ist vorgesehen, dass das Magazin über eine die Dreh- oder Schwenkbewegung steuernde Steuerkurve oder Steuerkulisse verfügt. Der wesentliche Vorteil in dieser mechanischen Steuerung liegt darin, dass keine separaten Stellmotoren und Steuerleitungen vorzusehen sind.

Es ist weiterhin vorgesehen, dass das Magazin über eine Auswurf- und/oder Einzugeinrichtung verfügt, mittels derer Tragelemente an die Vorrichtung übergeben oder der Vorrichtung entnommen werden. Hierdurch ist gewährleistet, dass der Formatwechsel vollautomatisch erfolgen kann.

Besonders bevorzugt ist vorgesehen, dass das Magazin und die Vorrichtung über eine Signalkopplung für Steuersignale und/oder über eine Energiekopplung verfügen, so dass die Versorgung des Magazins mit Energie und/oder Steuersignalen über die Vorrichtung erfolgt. Hierdurch ist gewährleistet, dass für den Formatwechsel lediglich eine zentrale Steuerung und eine zentrale Energieversorgung vorzusehen ist.

Schließlich ist vorgesehen, dass die Einschubelemente Haltelemente zur ortfesten Verankerung von Tragelementen aufweisen. Dies gewährleistet einen sicheren Halt der Tragelemente im Magazin.

Weiterhin ist vorgesehen, dass die Einschubelemente mit Abschnitten von Laufleisten gebildet sind, gleich jenen Laufleisten, auf denen die Tragelemente durch das Obertrum und/oder Untertrum geführt sind. Hierdurch ist ein besonders unproblematischer und einfach zu bewerkstelligender Formatwechsel möglich.

Es ist weiterhin vorgesehen, dass die Einschubelemente jeweils mit zumindest einem Distanzstück versehen sind, mit welchem sie sich am jeweils nächsten Einschubelement abstützen.

Schließlich ist vorgesehen, dass das Distanzstück und das Einschubelement zumindest hinsichtlich der Dreh- bzw. Schwenkbewegung miteinander bewegungsgekoppelt sind.

Schließlich ist vorgesehen, dass die Dreh- bzw. Schwenkbewegung von Einschubelement und/oder Tragelement während des unteren Wendeumlaufs entgegengesetzt zur Dreh- bzw. Schwenkrichtung im oberen Wendeumlauf ist.

Weitere Vorteile der Erfindung sowie ein tieferes Verständnis ergeben sich aus der nachfolgenden Beschreibung eines Ausführungsbeispiels. Es zeigen:
- Figur 1:: eine schematische Gesamtansicht der erfindungsgemäßen Vorrichtung ohne Magazin,
- Figur 2:: eine Ansicht gemäß Figur 1 mit Magazin vor Kopplung mit der Vorrichtung,
- Figur 3:: die Vorrichtung gemäß Figur 2 mit angesetztem Magazin,
- Figur 4:: die Vorrichtung gemäß Figur 3 mit angesetztem und festgelegten Magazin unter Darstellung der Übergabe eines Tragelementes aus dem Magazin an die Vorrichtung.

In den Figuren ist eine erfindungsgemäße Vorrichtung insgesamt mit der Bezugsziffer 10 versehen.

Die Vorrichtung 10 dient dem Abfüllen von flüssigen bis pastösen Nahrungsmitteln in Behälter 11, die mittels insgesamt mit der Bezugsziffer 12 bezeichneten Tragelementen durch die Vorrichtung 10 entlang an nicht dargestellten Arbeitsstationen geführt werden.

Die Vorrichtung 10 selbst untergliedert sich in ein bezüglich der Standfläche bzw. Aufstellebene der Vorrichtung 10 horizontal ausgetrichtetes Obertrum OT und ein parallel dazu und unterhalb dazu angeordnetes Untertrum UT. In der Regel befinden sich die Arbeitsstationen zur Behandlung der Behälter 11 oberhalb des Obertrums OT. Es gibt jedoch auch Anlagen, bei denen die Arbeitsstationen zwischen Obertrum OT und Untertrum UT angeordnet sind und die Behälter 11 vornehmlich im Untertrum UT behandelt werden. Aus diesem Grund können Obertrum OT und Untertrum UT auch als sogenannte Haupttrümer bezeichnet werden.

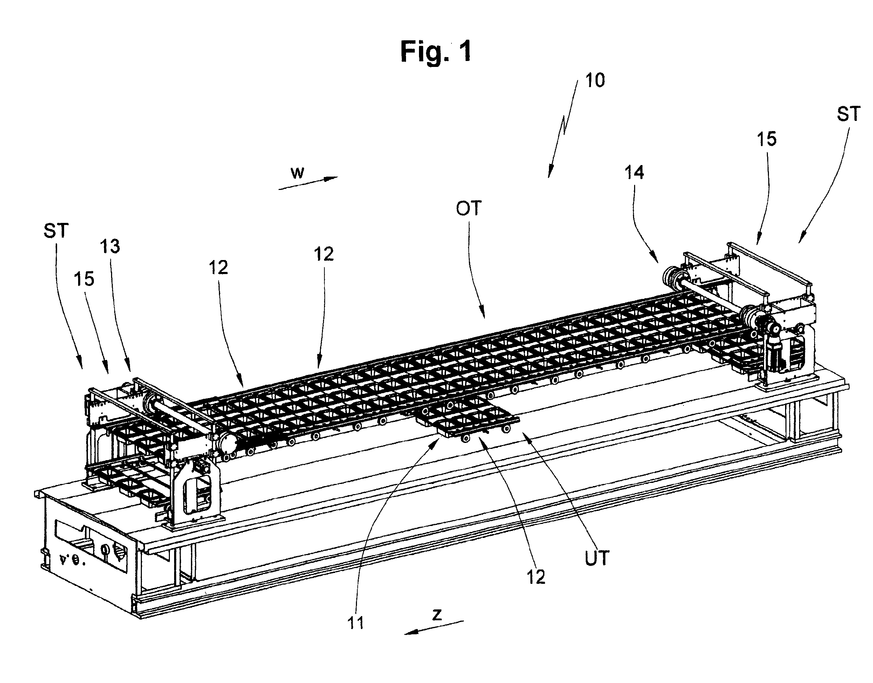

Um einen Umlauf der Tragelemente 12 zu gewährleisten werden diese über Seitentrümer ST zwischen den Haupttrümern bewegt. Die Tragelemente 12 durchlaufen die in Figur 1 dargestellte Vorrichtung 10 beispielsweise vom linken Seitentrum ST, welches mit einem Antrieb 13 versehen ist, in Förderrichtung w zum rechten Seitentrum ST, welches eine Bremseinrichtung 14 trägt. Antrieb 13 und Bremseinrichtung 14 begrenzen das Obertrum OT.

Die Tragelemente 12 gelangen dann über das rechte Seitentrum ST, welches als Hubwerk 15 ausgebildet und in der DE 10 2011 103 256 genauer beschrieben ist, durch eine aufzugartige Vertikalbewegung in das Untertrum UT. Von dort wird das Tragelement 12 zurück in Förderrichtung z zum linken Seitentrum ST bewegt und durch das dortige Hubwerk 15, ebenfalls beschreiben in DE 10 2011 103 256, vertikal bis auf die Höhe des Obertrums OT verfahren und dort in das Obertrum OT eingegliedert.

Bei der in Figur 1 dargestellten Vorrichtung zum Befüllen von Behältern mit Nahrungsmitteln handelt es sich um eine solche mit sogenanntem kettenlosen Antrieb. Diese Vorrichtung ist detailliert in der WO 2011/072628 A1 der Anmelderin beschrieben.

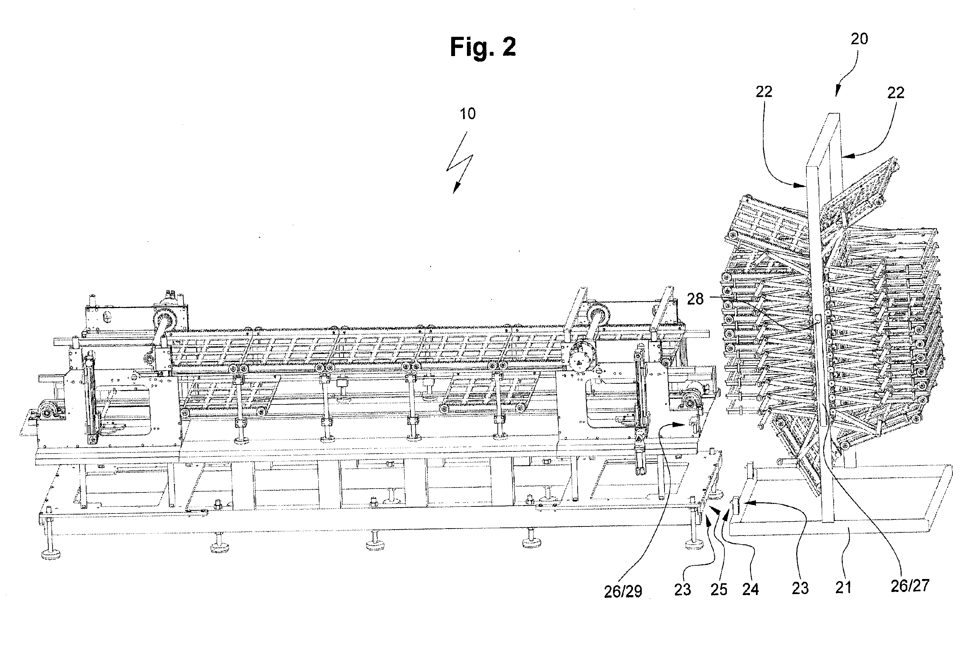

Figur 2 zeigt nun die Vorrichtung 10 gemäß Figur 1 unter zusätzlicher Darstellung eines Magazins 20, welches der Entnahme und Aufnahme von Tragelementen 12 dient. Das Magazin 20 umfasst zunächst einen bodennahen Tragrahmen 21, welcher in bevorzugter Weise mit hier nicht dargestellten Rollen versehen ist, um das Magazin 20 einfach verschieben zu können. Auf dem Tragrahmen 21 ist ein Paar vertikal zur Aufstellebene bzw. zum Tragrahmen 21 ausgerichtete Magazinstützen 22 montiert. Der Tragrahmen 21 ist mit Positioniergliedern 23 in Form von Positionierstiften 24 versehen, die in Richtung Vorrichtung 10 weisen. Die Vorrichtung 10 verfügt über korrespondierende Positionierglieder 23 in Form von Positionierausnehmungen 25. Des Weiteren verfügen sowohl das Magazin 20 wie auch die Vorrichtung 10 jeweils über Koppelglieder 26. Beim Magazin 20 handelt es sich um eine Riegelstange 27, die schwenkbar an einer Vertikalstütze 22 angeordnet ist. Die Riegelstange 27 verfügt an ihrem freien Endbereich über eine Riegelausnehmung 28, die mit dem vorrichtungsseitigen Koppelglied 26 in Form eines Riegelstiftes 29 kooperiert.

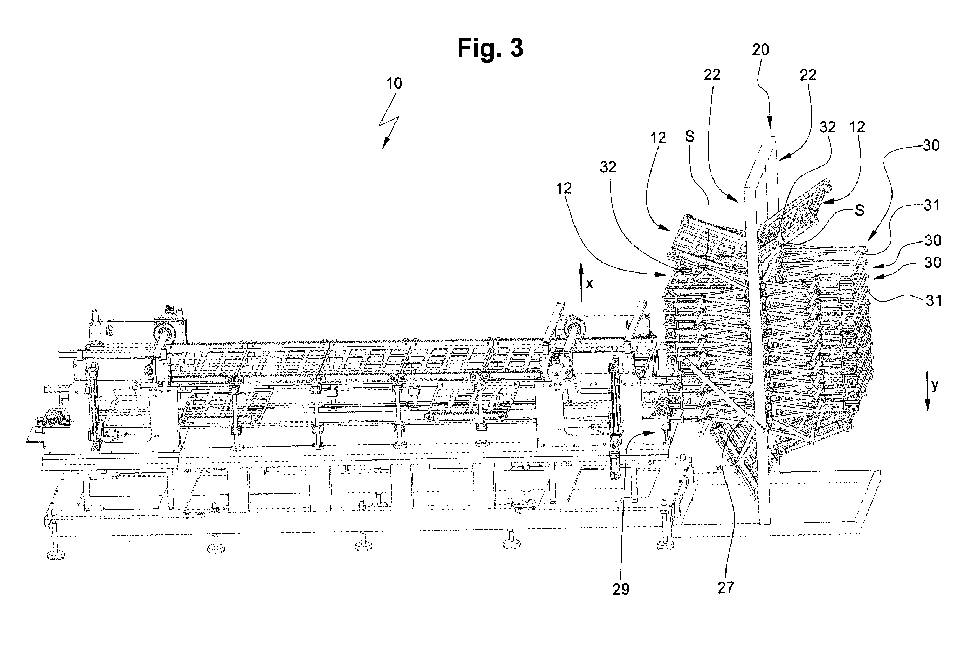

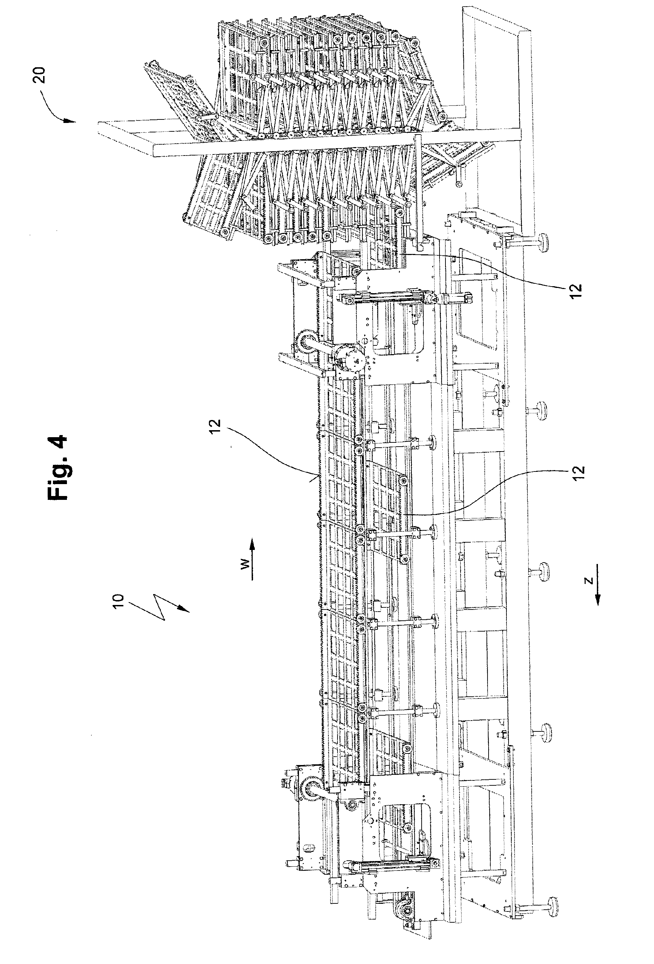

Die Funktion der Positionierglieder 23 und der Koppelglieder 26 ist den Figuren 3 und 4 zu entnehmen. In Figur 3 und 4 befindet sich das Magazin 20 in seiner Koppelstellung. In dieser greifen die Positionierglieder 23 des Magazins 20 und der Vorrichtung 10 ineinander, indem die Positionierstifte 24 in die Positionierausnehmungen 25 eingreifen und so das Magazin 20 hinsichtlich der Vorrichtung 10 ausrichtungskorrekt angeordnet ist. In Figur 4 befinden sich darüber hinaus die Koppelglieder 26 vom Magazin 20 und Vorrichtung 10 in Eingriff. Hierzu wurde die Riegelstange 27 in Richtung Riegelstift 29 verschwenkt, bis die Riegelausnehmung 28 den Riegelstift 29 überfängt und somit eine ortsfeste Anordnung des Magazins 20 an der Vorrichtung 10 gewährleistet ist.

Das Magazin 20 weist eine Vielzahl von Einschubelementen 30 auf, in denen Tragelemente 12 vorgehalten werden können. Die Einschubelemente 30 sind zumindest in Vertikalrichtung x nach oben und in Vertikalrichtung y nach unten verfahrbar, jeweils entlang der Magazinstützen 22. Im vorliegenden Ausführungsbeispiel sind die Einschubelemente 30 entlang der Magazinstützen 22 nach Art eines Paternosters geführt. Dies heißt, dass die Einschubelemente 30 in Vertikalrichtung x nach oben an einer bezüglich der Vorrichtung 10 vorderen Seite des Magazins 20 geführt sind. Am Endpunkt der Vertikalbewegung x findet ein Wendeumlauf statt, entlang dessen die Einschubelemente 30 in einem halbkreisförmigen Bogen auf eine bezüglich der Vorrichtung 10 rückwärtige Seite des Magazins 20 bewegt werden, um dort in Vertikalrichtung y nach unten geführt zu sein. Am unteren Ende der Vertikalbewegung y findet wiederum ein Wendeumlauf statt, der die Einschubelemente 30 zurück zur vorderen Seiten des Magazins 20 führt.

Die Einschubelemente 30 sind um eine Achse S dreh- bzw. schwenkbar im Magazin 20 angeordnet und können um diese Achse S um bis zu 360 Grad bewegt werden. Im vorliegenden Ausführungsbeispiel ist vorgesehen, dass die Dreh- bzw. Schwenkbarkeit der Einschubelemente 30 im Bereich der Wendeumläufe genutzt wird, um diese um jeweils 180 Grad zu wenden. Dies bedeutet im Rahmen des Ausführungsbeispiels, dass die Einschubelemente 30 bzw. die in den Einschubelementen 30 gelagerten Tragelemente 12 im vorderen Magazinbereich mit ihrer Oberseite voran in Vertikalrichtung x bewegt werden. Im Bereich des oberen Wendeumlaufs werden sie um 180 Grad geschwenkt, sodass sie im rückwärtigen Bereich des Magazins 20 mit ihrer Oberseite voran in Vertikalrichtung y nach unten geführt werden. Im unteren Wendeumlauf wird dann wiederum eine Wendebewegung um 180 Grad durchgeführt, sodass die Oberseite des jeweiligen Tragelementes 12 wieder in Vertikalrichtung x nach oben weist. Die Oberseite der Tragelemente 12 bzw. der Einschubelemente 30 weist im Ausführungsbeispiel so immer in die jeweilige Bewegungsrichtung x bzw. y.

Die Dreh- bzw. Schwenkbewegung des Einschubelementes 30 wird durch eine Steuerkurve oder Steuerkulisse gesteuert, die Bestandteil des Magazins 20 ist und an einer oder beiden Magazinstützen 22 angeordnet sein kann.

Um zu vermeiden, dass die Tragelemente 12 durch die Wendung der Einschubelemente 30 sich von selbigen lösen, sind nicht dargestellte Halteelemente an den Einschubelementen 30 vorgesehen, die die Tragelemente 12 dort ortsfest verankern.

Die Einschubelemente 30 verfügen über Laufleistenabschnitte 31, die in Art und Form den Laufleisten von Ober- bzw. Untertrum OT, UT entsprechen und quasi Kürzungsabschnitte derselben darstellen.

Um einen Formatwechsel bei der Vorrichtung 10 durchzuführen, wird das Magazin 20 wie in Figur 4 dargestellt an der Vorrichtung 10 verankert. Jeweils ein Einschubelement 30 wird in der Ebene des Untertrums UT bzw. des Obertrums OT positioniert, wobei das zum Untertrum UT ausgerichtete Einschubelement 30 ein Tragelement 12 enthält, wohingegen das zum Obertrum OT positionierte Einschubelement 30 frei ist. Per Hand oder mittels einer Auswurfeinrichtung wird nunmehr das Tragelement 12 aus dem in der Ebene des Untertrums UT befindlichen Einschubelement 30 an die Fördereinrichtung des Untertrums UT übergeben und so in das Untertrum UT eingegliedert. Gleichzeitig wird ein im Obertrum OT der Vorrichtung 10 befindliches Tragelement 12 in das in der Ebene des Obertrums OT positionierte freie Einschubelement 30 bewegt. Hierzu kann das Magazin 20 eine Einzugseinrichtung aufweisen, die diesen Vorgang unterstützt.

Das Eingliedern neuer Tragelemente 12 in Untertrum UT erfolgt in Förderrichtung z, das Ausgliedern von Tragelementen 12 aus dem Obertrum OT erfolgt in Förderrichtung w. Im Anschluss wird die Bewegung in Richtung x/y einsetzen und das nächste mit einem Tragelement 12 versehene Einschubelement 30 in der Ebene des Untertrums UT positionieren, was eine Positionierung eines freien Einschubelementes 30 in der Ebene des Obertrums OT zur Folge hat. Nun wird wiederum ein neues Tragelement 12 in das Untertrum UT eingegliedert, wobei gleichzeitig oder im Bedarfsfall auch zeitlich versetzt ein im Obertrum OT vorhandenes Tragelement 12 ausgegliedert wird. Dieser Vorgang wiederholt sich so lange, bis die Tragelemente 12 des einen Formats gegen die Tragelemente 12 eines anderen Formats ausgetauscht sind.

Selbstverständlich ist das Einbringen und Entnehmen von Tragelementen 12 nicht zwingend miteinander gekoppelt. So ist es denkbar, zuerst eine Anzahl von Tragelementen zu entnehmen und erst dann Tragelemente 12 der Vorrichtung 10 zuzuführen. Ebenso kann, Platz in einem der Trümer UT, OT vorausgesetzt, zuerst eine Anzahl Tragelemente 12 eingesetzt werden, bevor die Entnahme der Tragelemente 12 erfolgt. Die genaue Taktung von Einbringung und Entnahme hängt von den spezifischen Gegebenheiten der Vorrichtung ab.

Es vorgesehen, dass das Magazin 20 und die Vorrichtung 10 über eine Signalkopplung für Steuersignale und/oder über eine Energiekopplung verfügen. Hierüber lassen sich Steuerleitungen und Energieleitungen von der Vorrichtung 10 an das Magazin 20 koppeln, sodass das Magazin 20 durch die Steuerung der Vorrichtung 10 gesteuert ist und über die Energieversorgung der Vorrichtung 10 mit Energie zum Betreiben des paternosterartigen Umlaufs und zur Ansteuerung der eventuell vorhandenen Auswurf- und Einzugseinrichtungen gespeist wird.

In den Figuren ist schließlich noch zu erkennen, dass jedes Einschubelement 30 über Distanzstücke 32 verfügt, mit welchem sich die Einschubelemente 30 aneinander abstützen und die eine korrekte Positionierung der Einschubelemente 30 hinsichtlich Obertrum OT und Untertrum UT unterstützen. Bei einer paternosterartigen Bewegung kann es erforderlich und sinnvoll sein, dass die Distanzstücke und das zugehörige Einschubelement 30 hinsichtlich der Dreh- bzw. Schwenkbewegung miteinander bewegungsgekoppelt sind. Dies ist insbesondere dann von Vorteil, wenn die Dreh- bzw. Schwenkbewegung im unteren Wendeumlauf entgegengesetzt zur Dreh- bzw. Schwenkbewegung im oberen Wendeumlauf ist.

Die Erfindung ermöglicht es auf vorteilhafte Weise, einen schnellen Formatwechsel bei einer gattungsgemäßen Vorrichtung 10 zur Befüllung von Behältern mit Nahrungsmitteln durchzuführen. Sie ist insbesondere vorgesehen für Vorrichtungen mit kettenlosem Vortrieb, bei welchen die einzelnen Tragelemente 12 zwar einen Verband bilden können, jedoch nicht an einem gemeinsamen Fördermittel befestigt sind. Die Vorrichtung gemäß WO 2011/072628 A1 der Anmelderin eignet sich für den Formatwechsel mit dem beschriebenen Magazin besonders, da das Obertrum OT und das Untertrum UT stirnseitig - also in bzw. entgegen der Förderrichtung w/z - frei zugänglich sind und die Einschubelemente 30 ohne vorherige Demontage von Vorrichtungsteilen in der Ebene der jeweiligen Trümer OT, UT und unmittelbar an diese ankoppelbar sind.

Jedoch eigenen sich durchaus auch andere Vorrichtungen mit kettenlosem Antrieb für das beschrieben Magazin, auch wenn die Umsetzung der Tragelemente 12 vom Obertrum OT ins Untertrum UT im Befüllbetrieb anders gelöst ist als bei der anmeldereigenen WO 2011/072628 A1. In diesem Fall wären die Umsetzeinrichtungen vorzugsweise mit Schnellkoppelverschlüssen an der Vorrichtung anzusetzen, um für den Formatwechsel leicht demontierbar zu sein. Nach der Demontage der Umsatzeinrichtungen kann wie beschrieben das erfindungsgemäße Magazin auch an solche Vorrichtungen angesetzt werden.

### Bezugszeichenliste:

- 10: Vorrichtung zum Befüllen von Behältern
- 11: Behälter
- 12: Tragelement
- 13: Antrieb
- 14: Bremseinrichtung
- 15: Hubwerk

- 20: Magazin
- 21: Tragrahmen
- 22: Magazinstütze
- 23: Positionierglied
- 24: Positionierstift
- 25: Positionierausnehmung
- 26: Koppelglied
- 27: Riegelstange
- 28: Riegelausnehmung
- 29: Riegelstift
- 30: Einschubelement
- 31: Laufleistenabschnitt
- 32: Distanzstück

- S: Schwenk- bzw. Drehachse
- x: Vertikalrichtung
- y: Vertikalrichtung
- w: Förderrichtung
- z: Förderrichung

- OT: Obertrum
- UT: Untertrum
- ST: Seitentrum

## Patentansprüche

1. Vorrichtung (10) zum Befüllen von Behältern mit dünnflüssigen bis pastösen Nahrungsmitteln, wobei
- Tragelemente (12) in Förderrichtung entlang eines Obertrums (OT), eines ersten Seitentrums (ST), eines Untertrums (UT) und eines zweiten Seitentrums (ST) endlos durch die Vorrichtung (10) geführt sind,
- die Tragelemente (12) kettenlos durch die Vorrichtung (10) geführt sind,
- die Tragelemente (12) von einer Fördereinrichtung (15) zwischen dem Obertrum (OT) und dem Untertrum (UT) verfahren werden,
- die Tragelemente (12) Aufnahmen für die Behälter (11) aufweisen,
- die Behälter (11) in den Tragelementen (12) entlang von Arbeitsstationen geführt sind,
**dadurch gekennzeichnet, dass** ein Magazin (20) an zumindest einem der Seitentrümer (ST) anordenbar ist und das Magazin (20) dem Einbringen von weiteren Tragelementen (12) aus dem Magazin (20) in die Vorrichtung (10) und/oder der Aufnahme von in der Vorrichtung (10) befindlichen Tragelementen (12) dient.

2. Vorrichtung nach Anspruch 1, **dadurch gekennzeichnet, dass** das Magazin (20) Positionierglieder (23) aufweist, die mit vorrichtungsseitigen Positioniergliedern (23) kooperieren, um eine ausrichtungskorrekte Anordnung des Magazins (20) an der Vorrichtung (10) zu gewährleisten.

3. Vorrichtung nach Anspruch 1 oder 2, **dadurch gekennzeichnet, dass** das Magazin (20) und die Vorrichtung (10) jeweils miteinander kooperierende Koppelglieder (26) aufweisen, die eine ortsfeste Anordnung des Magazins (20) an der Vorrichtung (10) gewährleisten.

4. Vorrichtung nach einem der Ansprüche 1 bis 3, **dadurch gekennzeichnet, dass** das Magazin (20) Einschubelemente (30) zur Aufnahme und/oder Entnahme einzelner Tragelemente (12) aufweist.

5. Vorrichtung nach einem der vorhergehenden Ansprüche, **dadurch gekennzeichnet, dass** die Einschubelemente (30) vertikal verfahrbar im Magazin (20) angeordnet sind.

6. Vorrichtung nach einem der vorhergehenden Ansprüche, **dadurch gekennzeichnet, dass** die Einschubelemente (30) nach Art eines Paternosters an einer vertikal ausgerichteten Magazinstütze (22) geführt sind.

7. Vorrichtung nach einem der vorhergehenden Ansprüche, **dadurch gekennzeichnet, dass** die Einschubelemente (30) und/oder die Tragelemente (12) dreh- oder schwenkbar im Magazin (20) gelagert sind.

8. Vorrichtung nach Anspruch 6 und 7, **dadurch gekennzeichnet, dass** die Einschubelemente (30) und/oder die in den Einschubelementen (30) einsitzenden Tragelemente (12) im oberen und unteren Wendeumlauf um jeweils etwa 180 Grad gedreht oder geschwenkt sind.

9. Vorrichtung nach Anspruch 8, **dadurch gekennzeichnet, dass** das Magazin (20) über eine die Dreh- oder Schwenkbewegung steuernde Steuerkurve oder Steuerkulisse verfügt.

10. Vorrichtung nach einem der vorhergehenden Ansprüche, **dadurch gekennzeichnet**, das das Magazin (20) über eine Auswurf- und/oder Einzugeinrichtung verfügt, mittels derer Tragelemente (12) an die Vorrichtung (10) übergeben oder der Vorrichtung (10) entnommen werden.

11. Vorrichtung nach einem der vorhergehenden Ansprüche, **dadurch gekennzeichnet, dass** das Magazin (20) und die Vorrichtung (10) über eine Signalkopplung für Steuersignale und/oder über eine Energiekopplung verfügen, so dass die Versorgung des Magazins (20) mit Energie und/oder Steuersignalen über die Vorrichtung (10) erfolgt.

12. Vorrichtung nach Anspruch 4, **dadurch gekennzeichnet, dass** die Einschubelemente (30) Haltelemente zur ortfesten Verankerung von Tragelementen (12) aufweisen.

13. Vorrichtung nach einem der Ansprüche 4 bis 12, **dadurch gekennzeichnet, dass** die Einschubelemente (30) mit Abschnitten von Laufleisten gebildet sind, gleich jenen Laufleisten, auf denen die Tragelemente durch das Obertrum und/oder Untertrum geführt sind.

14. Vorrichtung nach einem der Ansprüche 4 bis 13, **dadurch gekennzeichnet, dass** die Einschubelemente (30) jeweils mit zumindest einem Distanzstück (32) versehen sind, mit welchem sie sich am jeweils nächsten Einschubelement (30) abstützen.

15. Vorrichtung nach Anspruch 7 und 14, **dadurch gekennzeichnet, dass** das Distanzstück (32) und das Einschubelement (30) zumindest hinsichtlich der Dreh- bzw. Schwenkbewegung miteinander bewegungsgekoppelt sind.

16. Vorrichtung nach Anspruch 8, **dadurch gekennzeichnet, dass** die Dreh- bzw. Schwenkbewegung von Einschubelement (30) und/oder Tragelement (12) während des unteren Wendeumlaufs entgegengesetzt zur Dreh- bzw. Schwenkrichtung im oberen Wendeumlauf ist.
